# EUROPEAN PATENT APPLICATION

(11) **EP 1 780 819 A1**
(43) Date of publication of application: **02.05.2007**
(21) Application number: 06122856.5
(22) Date of filing: 24.10.2006
(51) Int. Cl.: H01M 2/20

(54) **Cell connection straps for battery cells of a battery pack**

(30) Priority: 09.08.2006 US 836396 P; 31.10.2005 US 731501 P
(71) Applicant: Black & Decker, Inc., Newark, DE 19711 (US)
(72) Inventor: White, Daniel J., Baltimore, PA 21220 (US); Phillips, Steven J., Ellicott City, MD 21042 (US); Casalena, Adam M., Baltimore, MD 21236 (US); Johnson, Alexis W., Baltimore, MD 21236 (US); Roberts Jr, Michael W., York, PA 17404 (US)
(74) Representative: Bell, Ian Stephen

(57) **Abstract**

A cell connection strap for electrically connecting a pair of adjacent battery cells within a battery pack includes, in one example, a fusible link for preventing a thermal runaway condition from occurring in a cell connected thereto. The strap may include raised features thereon for permitting relative movement between the cells in the pack due to vibration or an impact of the pack from translating stress to welds connecting the straps to the cells. In another example, the body of the cell strap may include slits formed in sides thereof to reduce rigidity of the strap for protecting the welds between strap and cell, and also provides a fusible link capability in the strap for preventing a thermal runaway condition from occurring in a cell connected thereto.

## Description

This application claims the benefit under 35 U.S.C. §119(e) to the following United States Provisional Patent Applications: Serial No. 60/731,501, filed October 31, 2005 to Daniel J. White et al. and entitled "FUSE PROTECTION FOR BATTERY PACKS HAVING LI-ION CELLS IN PARALLEL"; and Serial No. 60/836,396, filed August 9, 2006 to Steven J. Phillips et al. and entitled "WELD STRAP IMPROVEMENTS FOR BATTERY CELLS". The entire contents of each of these provisional applications are hereby incorporated by reference herein.

Example embodiments in general relate to battery cell connection straps for electrically connecting battery cells in a battery pack.

As cordless power tools begin to push new, higher power to density (mass and volume) limits, new battery chemistries are being investigated as a viable power sources for high-power (such as above 18V) cordless power tool applications. Such battery packs should provide much higher power but not add significantly to total tool system weight. Conventional battery packs for power tools include NiCd, NiMH and lead acid battery packs.

Another cell chemistry that has been conventionally used for powering lower voltage devices (such as cell phones and laptops) and lower voltage power tools, such as screwdrivers) are cells having a lithium-ion (Li-ion) chemistry. A challenge of using Li-ion cells in a much higher-power environment, such as in a battery pack for supplying power to cordless power tools having current draws at multiple orders or magnitudes in excess of that of a typical cell phone or laptop (0.1-1A)), is that Li-ion cells may pose a safety issue for the end user at these higher currents. In the Li-ion industry, the issue of concern is referred to as "thermal runaway". A thermal runaway condition is caused by overheating of a Li-ion battery cell (either due to a malfunction or discrepancy/damage in the cell itself or due to some external source causing the damage or malfunction in the cell) until a reaction occurs inside the cell. The reaction causes the release of not only the stored energy in the cell, but also the chemical energy in the lithium metal and the fuel energy of the flammable electrolyte. These reactions happen quickly (on the order of seconds) and have caused several recalls of products and/or injuries to end users.

A strategy used by Li-ion cell manufacturers in order to release safer Li-ion battery packs into the market is to utilize smaller cells (lower capacity) in the design of a battery pack used in higher power electrical devices such as power tools. These smaller cells each contain less energy than corresponding larger cells. Thus, in a condition where a given cell would generate heat due to some external damage, for example, a smaller cell would produce less heat and be less likely to heat to a point where the cell goes into thermal runaway. Also, using smaller cells in parallel would cut the current going to each cell in half relative to a single serial string battery pack, thus further reducing heat generation.

Using smaller cells (less capacity) has proven safer in the industry and has been used in several power tool applications. There is a drawback to lower capacity cells, however. Capacity is a major request from a power tool customer and directly correlates to the amount of run time a cordless power tool will provide to the end user.

In an effort to address this concern, some manufacturers are using serial strings of smaller cells in parallel or parallel strings of series cells. This does not solve the safety problem; however, because when one cell is in parallel with another, it is possible to have a condition where one cell becomes damaged and the energy of the other "good" cell is dumped into the damaged cell. With the exception of minor losses in cell connection straps which connect the battery cells in parallel together, this condition would be the same as having one large cell, hence an equal likelihood of reaching a thermal runaway condition.

In addition to thermal runaway concerns, another concern is that the cell straps in a battery pack designed for higher-power applications such as those performed by a cordless power tool can become disconnected from the cells due to pack vibrations during tool use and/or a drop or impact of the battery pack, which is foreseeable in a power tool environment. In a battery pack for a cordless power tool having multiple cells, these cell connection straps connect the battery cells together in series and/or parallel. The cell straps are typically attached to the tops of cell housings which enclose the battery cells. This housing that contains the cell is referred to as a "can".

These welds can be particularly weak when the cell can is constructed with a highly electrically conductive material such as aluminum. During a drop of the battery pack, as would be seen in a power tool environment, these welds tend to fail. A common failure mechanism is that the weld joint breaks when it is stressed as the cells move relative to one another within the power tool battery pack. The rigid cell straps that connect adjacent cells translate all of the relative motion (and therefore stress) to the relatively weak weld joint, causing the cell strap to become disconnected or detached from the cell cans within the pack.

An example embodiment of the present invention is directed to a cell connection strap for electrically connecting a pair of adjacent battery cells within a battery pack. The strap includes a body having a length extending between a first and second end and a width between sides thereof. A fuse link is disposed in the body between the first and second ends.

Another example embodiment is directed to a battery pack. The pack includes a housing and a plurality of cells disposed in the housing and configured in a serial-parallel arrangement within the housing. The pack includes a plurality of cell connection straps for electrically connecting pairs of adjacent battery cells within a battery pack. A cell strap connecting a pair of cells in parallel in the pack includes a fuse link therein.

Another example embodiment is directed to a cell connection strap for electrically connecting a pair of adjacent battery cells within a battery pack. The strap includes a body having a length extending between a first and second end and a width between sides thereof. The body includes a plurality of raised features formed thereon between the first and second ends.

Another example embodiment is directed to a battery pack which includes a housing and a plurality of cells disposed in the housing and configured in a serial-parallel arrangement within the housing. The pack includes a plurality of cell connection straps for electrically connecting pairs of adjacent battery cells within a battery pack. Each cell strap has a body terminating between first and second ends. A cell strap connecting a pair of cells in parallel in the pack includes a fuse link and a plurality of raised features formed in its body between the first and second ends.

Another example embodiment is directed to a cell connection strap for electrically connecting a pair of adjacent battery cells within a battery pack. The strap includes a body having a length extending between a first and second end and a width between sides thereof. The strap includes a first pair of slits, with each slit of the first pair formed in a lengthwise direction of the body at a corresponding end. The strap includes a second pair of slits formed in a widthwise direction of the body between the first and second ends, with one slit formed in each side of the body.

Another example embodiment is directed to a battery pack having a housing and a plurality of cells disposed in the housing and configured in a serial-parallel arrangement within the housing. The pack includes a plurality of cell connection straps for electrically connecting pairs of adjacent battery cells within a battery pack. Each cell strap comprises a body having a length extending between a first and second end and a width between sides thereof, a first pair of slits and a second pair of slits. Each slit of the first pair is formed in a lengthwise direction of the body at a corresponding end of the body. The second pair of slits are formed in a widthwise direction of the body between the first and second ends, with one slit of the pair formed in each side of the body.

The example embodiments of the present invention will become more fully understood from the detailed description given herein below and the accompanying drawings, wherein like elements are represented by like reference numerals, which are given by way of illustration only and thus are not limitative of the example embodiments of the present invention.
FIG. 1 is a top view showing cell connection straps within a battery pack in accordance with an example embodiment.
FIG. 2A is a top view of a cell connection strap for cells of a battery pack in accordance with another example embodiment.
FIG. 2B is a side view of the cell strap in FIG. 2A.
FIG. 3 is a top view of a cell connection strap for cells of a battery pack in accordance with another example embodiment.
FIG. 4 is a top view of a cell connection strap for battery cells of a battery pack in accordance with another example embodiment.
FIG. 5 is a top view of a cell connection strap having a fuse link in accordance with another example embodiment.
FIG. 6 is a top view of a cell connection strap having a fuse link in accordance with another example embodiment.
FIGS. 7A-7H are top views of cell strap variations in accordance with the example embodiments.

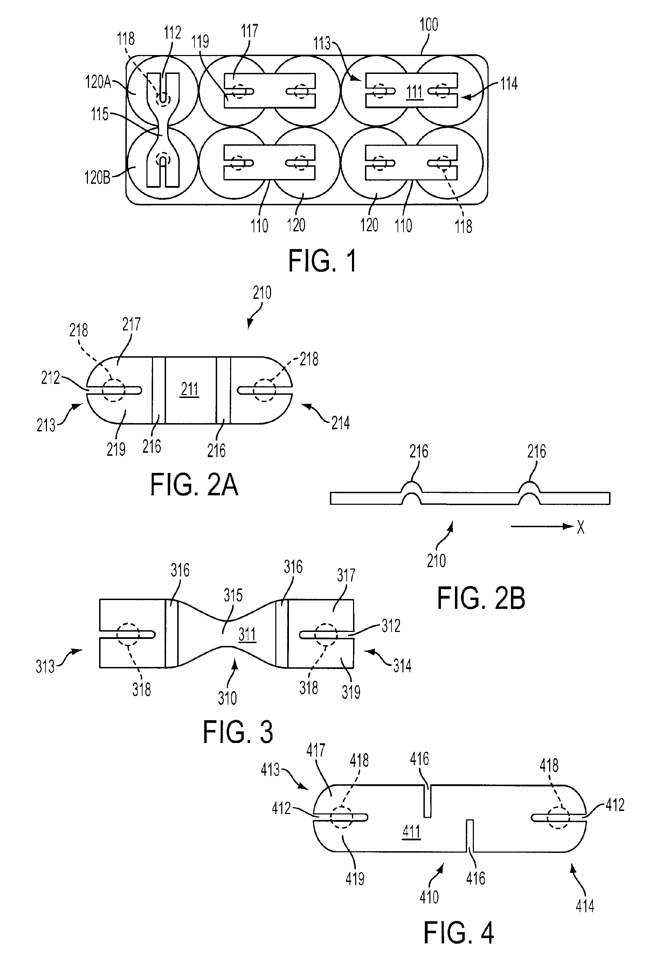

FIG. 1 is a top view showing cell connection straps within a battery pack that has a pair of serial strings of cells 120 connected in parallel. Power terminal leads are not shown for purposes of clarity, it being understood that a pair of power leads may be connected to cells 120 on an opposite side of the pack 100, in place of a given cell strap 110 between two cells, as is known. In FIG. 1, there is shown only a bottom housing of a battery pack 100 (top housing removed for clarity) containing a plurality of cells 120 in two serial strings that are connected in parallel. This is just an example connection scheme, as battery pack 100 may be configured to have additional cells 120 in series or parallel. The cells 120 may be oriented sideways within the housing of pack 100 instead of upright as shown in FIG. 1.

In one example, the battery pack 100 may include high power density (mass), Li-ion cells 120, which have a much higher power density as compared to NiMH or NiCd cells. The example embodiments are not so limited, however, as the cells 120 may have a NiMH, NiCd, lead acid or another lithium or lithium lon chemistry such as Lithium sulfur dioxide in alternative embodiments. A battery cell is typically housed in what is referred to as a can. The can represents the outer shell of the cell 120 and is typically steel or aluminum, for example but cold be made of a variety of other materials, alloys, foils or polymers. FIG. 1 shows top ends of the cans housing cells 120. To increase the power density (mass) even further, aluminum cans may be used for cells 120 to reduce the weight of the cell, instead of steel cans, which conventionally have been used for enclosing such cells 120. For ease of description, it is understood each cell 120 is contained within a metal can.

A typical battery cell 120 in pack 100 may be configured as having a separator provided between a positive electrode (cathode) and negative electrode (anode) in a spiral round configuration, which is an electrode structure of high surface area created by winding the electrodes and separator into a spiral-wound, jelly-roll configuration. In an example battery pack for supplying power to cordless power tools, these cells can be configured as cylindrical cells having a jelly roll configuration.

In FIG. 1, there is shown a plurality of cell straps 110 electrically connecting adjacent cells 120. Each cell strap 110 may be embodied as a metallic strip having a body 111 terminating at ends 113 and 114. End 113 makes contact with a terminal on one cell 120 and end 114 makes contact with a terminal on a second adjacent or adjoining battery cell 120 for making an electric connection between the two adjacent cells 120, as is known. Thus, each cell strap 110/110A has a length that is sufficient to make connection, both physically and electrically, with two adjacent cells 120.

In an example, the cell straps 110, 110A may be formed of a material having desirable electrical conducting characteristics. One example material is a nickel 200 or 201 alloy, although other materials such as copper, aluminum, steel, etc.. Clad and plated materials such as nickel clad copper can also be used, which combine the desirable qualities of one material with the desirable qualities of the other. In this example, the nickel allows for good weldability, whereas the copper give superior current carrying capability, could be used as the material for cell straps 110, 110A.

Connection may be a series electrical connection or a parallel electrical connection, connecting terminals of adjacently positioned cells 120 within pack 100. In the example of FIG. 1, pairs of serially-arranged cells 120 are connected by cell straps 110 and parallel-arranged cells 120A and 120B are connected by cell strap 110A. The arrangement of serial strings of cells 120 in parallel as shown in the pack 100 of FIG. 1 provides a total voltage that is increased over the voltage of the individual cells.

Physical connection between cell straps 110 or 110A and individual cells 120 may be accomplished by resistive, or ultrasonic welding to connect a terminal on the can surface of a cell 120 to a strap 110/110A at an interface referred to as weld joint 118, as is known in the art. In FIG. 1, the weld joint 118 is shown generally by the dotted line circles 118 beneath straps 110/110A. In an alternative, laser welding may be desirable to weld cell straps 110, 110A at the weld joint 118 to aluminum cans enclosing cells 120. While electrically connecting the cells 120 in the example serial-parallel arrangement as shown in FIG. 1, cell straps 110 and 110A also physically connect adjoining cells 120.

Each cell strap 110/110A can have a centrally located slit 112 at each end 113 and 114 thereof dividing a positive electrode leg 117 from a negative electrode leg 119 of the strap 110. Alternatively, a slit can be provided across a width of the strap 110 between the points on the strap 110 where the welds are to be made. For example, slits 112 can be formed in the middle of the strap 110/110A.

As shown in FIG. 1, the cell strap 110A between two cells 120A and 120B in parallel includes a fuse link 115. The fuse link 115 is characterized as being a substantially narrowed or thinning portion at the center of body 111 of the cell strap 110A between the two parallel-connected cells 120A and 120B. If desired, strap 110A could additionally replace standard cell connection straps 110 between serially-connected cells.

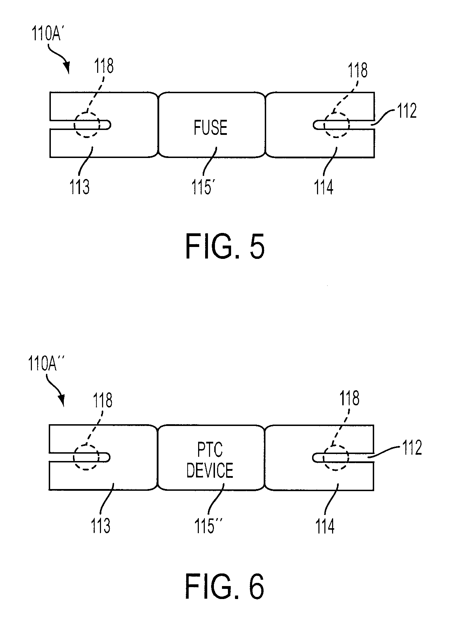

FIGS. 5 and 6 illustrate cell straps with alternative fuse link designs. In FIGS. 5 and 6, only the cell strap is shown for purposes of clarity, it being understood that the cell strap configurations shown in FIGS. 5 and 6 are applicable to pack 100 in FIG. 1.

As shown in FIG. 5, the fuse link 115 alternatively can be embodied as a conventional fuse 115' attached between metal end portions 113 and 114 of an alternative cell strap 110A' construction. The metal end portions are composed of an electrically conducting material such as nickel or an alloy thereof, for example. As shown in FIG. 6, fuse link 115 further can be embodied as a positive temperature coefficient (PTC) device 115" attached between end portions 113 and 114 of another alternative cell strap 110A" construction, for example. Fuse 115' and PTC device 115" can be attached to end portions 113, 114 via resistive, ultrasonic or laser welding, for example.

By configuring cell strap 110A to include a fuse link 115, if one cell (in this example cell 120B (or vice versa) is damaged, the other, undamaged cell 120A that is connected thereto will begin to quickly dump its energy into the damaged cell 120B. This, the current will climb in the fuse link 115 to blow open fuse link 115, thus preventing the energy from being transferred from the "good" cell, in this example cell 120A, to the damaged cell 120B. Accordingly, a thermal runaway condition in a damaged cell 120 of pack 100 can be avoided.

Similarly, if a fuse 115' is provided between end portions 113 and 114 of alternative strap 110A', as cell 120A in the example pack 100 of FIG. 1 goes to quickly dump its energy into the damaged cell 120B, the current will climb in the fuse 115' to blow the fuse 115', thus preventing the energy from being transferred from the cell 120A to the damaged cell 120B. A thermal runaway condition is thus avoided.

If instead of using a narrowed width cell strap 110A between two cells in parallel as shown in FIG. 1 or a fuse 115' between strap end portions 113 and 114 of a cell strap 110A' that connects cells 120A and 120B, as shown in FIG. 5, a PTC device 115" can be attached between end portions 113 and 114 at the center of the alternative cell strap 110A" configuration shown in FIG. 6. PTC devices are devices whose resistance increases as the temperature of the device increases. For example, if cell 120B is damaged and adjacent, undamaged cell 120A begins to dump its energy into its parallel-connected adjoining cell 120B, the PTC device 115" formed centrally in the alternative cell strap 110A" configuration between the cells 120A, 120B increases in resistance to limit the current to cell 120B and avoid and/or possibly prevent a thermal overload condition.

Although strap 110A and its fuse link variants are described as between parallel-connected cells 120A and 120B in FIG. 1, strap 110A can replace conventional straps 110 between serially-connected cells 120. Thus, all cell straps connecting cell in series or parallel within pack 100 can be embodied as cell strap 110A and its variants in FIGS. 5 and 6.

In one particular example, cell straps 110A" with PTC device 115" therein can be used as a fuse link between cells 120 in series, in addition to between parallel-connected cells 120 within pack 100. Power PTC devices are being developed that can placed in series with cells 120 within battery pack 100.

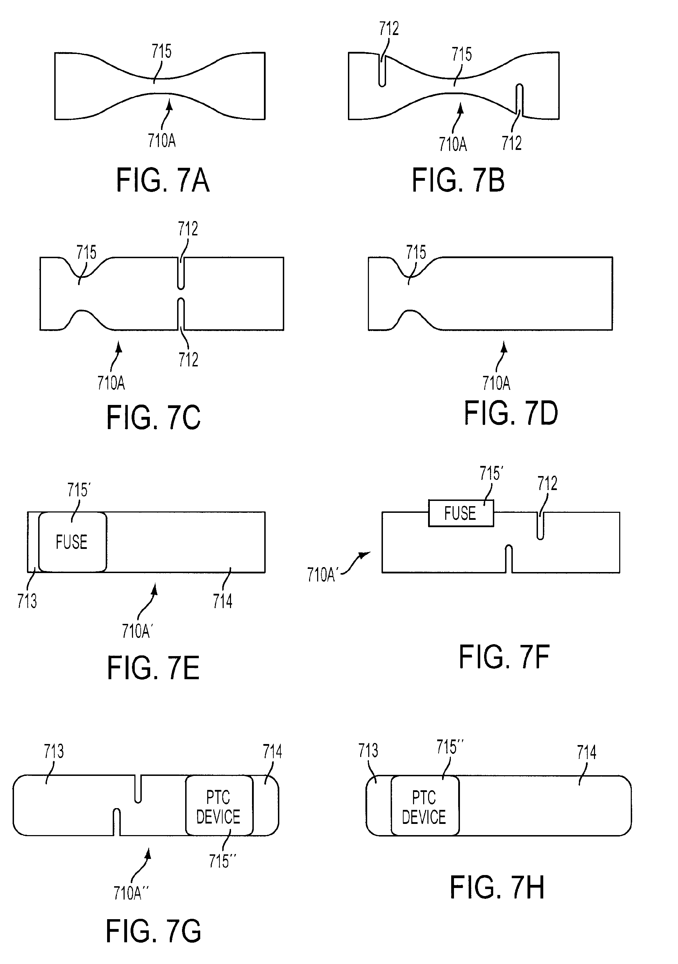

FIGS. 7A-7H illustrate alternative cell strap configurations. The cells straps shown in FIGS. 1, 5 and 6 may alternatively have no slits therein, or slits which are formed in the sides or at a middle of a strap. Further, an example fuse link (narrowed strap portion, fuse or PTC device) may be formed on a side of the strap, or off-center closer to one side of the cell strap and hence closer to one of the cells 120. For example, the fuse link 715 in FIG. 7A is formed in a cell strap 710A which has no slits. In FIG. 7B, slits 712 are shown formed in the sides of strap 710A rather than the ends. FIGS. 7C and 7D show a fuse link 715 that is formed at an end of a cell strap 710A, with centrally located slits 712 and without slits 712 therein.

FIGS. 7E and 7F show example cell strap variants of FIG. 5. In FIG. 7E, fuse 715' is attached closer one cell (not shown) between a shorter portion 713 and a longer end portion 714 of cell strap 71 0A'. Fuse 715' is shown on a side of cell strap 710A' in FIG. 7F, with slits 712 formed within a middle portion of cell strap 710A'.

FIGS. 7E and 7F show example cell strap variants of FIG. 5. In FIG. 7E, fuse 715' is attached closer one cell (not shown) between a shorter portion 713 and a longer end portion 714 of cell strap 710A'. There are no slits 712 in the cell strap 710A' of FIG. 7E. Fuse 715' is shown on a side of cell strap 710A' in FIG. 7F, with slits 712 formed within a middle portion of cell strap 71 0A'.

FIGS. 7G and 7H show additional example cell strap variants of FIG. 6. In FIG. 7G, PTC device 715" is attached closer one cell (not shown) between a shorter end portion 714 and a longer end portion 713 of cell strap 710A". There are slits 712 formed in the middle of cell strap 710A", instead of at the ends. FIG. 7H illustrates a similar cell strap 710A" but with no slits formed therein, and with PTC device 715" attached off-center between end portions 713 and 714. These additional cell strap variants are merely exemplary, other configurations would be evident to one of ordinary skill in the art.

In addition to being configured as described above in order to avoid or prevent a thermal overload condition in one of the cells, it is also desirable to reduce the rigidity of the cell straps 110 and/or 110A so as to avoid a failure at a weld joint between a given strap 110 and the can surface of its connected cell 120, should the weld joint become stressed as the cells move relative to one another within the power tool battery pack due to pack vibration and or a drop or impact of the pack.

FIG. 2A is a top view of a cell connection strap for cells of a battery pack in accordance with another example embodiment, and FIG. 2B is a side view of the cell strap in FIG. 2A. The strap configuration shown in FIGS. 2A and 2B is applicable as a substitute configuration for one or more of the straps 110/110A shown in the pack 100 of FIG. 1. In FIG. 2A, the weld joint is generally indicated by element 218, and the cell 120 is not shown for purposes of clarity. In FIG. 2A, cell strap 210 has a body 211 terminating at ends 213, 214. Each end 213, 214 has a centrally located slit 212 dividing a positive electrode leg 217 from a negative electrode leg 219 of the strap 210. Cell strap 210 includes a plurality of crumple zones (indicated generally at 216) formed between the slits 212 in the ends of the strap 210 in a third dimension.

As best shown in FIG. 2B, the crumple zones are characterized as one or more raised features 216 which can be stamped into the cell strap 210 during manufacture. The raised features 216 extend across the entire width of the strap 210 so as to be perpendicular to the slits 212 and extend vertically upward from a plane of the strap 210 (shown by "X" in FIG. 2B). The inclusion of these raised features 216 permit for movement of the strap 210 along the strap plane X. Introducing these features 216 in strap 210 helps the strap 210 to divert stresses away from the more fragile welds at weld joint 218 at the interface between strap 210 and a can surface of cell 120. These stresses can be induced by cell movement relative to one another within the battery pack 100 due to pack vibration and or a drop or impact of the pack.

Although strap 210 is described as attached between parallel-connected cells 120A and 120B in FIG. 1, strap 210 can replace conventional straps 110 between serially-connected cells 120. Thus, all cell straps connecting cell in series or parallel within pack 100 can be embodied as cell strap 210.

Of course, the location of slits 212 and raised features 216 in FIGS. 2A and 2B is merely exemplary. These locations can be varied in a somewhat similar fashion as shown in FIGS. 7A to 7H. Slits 212 can be formed in the middle or sides of cell strap 210, or no slits 212 may be formed therein. In another example, the raised features 216 may be formed at ends of strap 210, and multiple raised features 216 (>2) can be formed across the width of cell strap 210, with or without slits 212 formed therein.

FIG. 3 is a top view of a cell connection strap for cells of a battery pack in accordance with another example embodiment. FIG. 3 combines the crumple zones shown in FIGS. 2A and 2B with the fuse link shown in FIG. 1 (and alternative fuse link embodiments 115' and 115" in FIGS. 5 and 6) to provide a cell strap that has a reduced rigidity and which also is configured to prevent the occurrence of a thermal runaway condition in a connected cell 120. In FIG. 3A, the weld joint is generally indicated by dotted line circle 318, and the adjoining cells 120 are not shown for purposes of clarity. The strap configuration shown in FIG. 3 is thus applicable as a substitute configuration for one or more of the straps 110/110A shown in the pack 100 of FIG. 1.

The cell strap 310 has a body 311 terminating at ends 313 and 314. In this particular example, each end 313, 314 has a slit 312 formed in a lengthwise direction of the body 411 for dividing a positive electrode leg 317 from a negative electrode leg 319 of the strap 310. Of course, the location of slits 312 can be in the sides or middle of cell strap 310, as shown in the cell strap variants of FIGS. 7A to 7H.

As shown in FIG. 3, raised features 316, which provide crumple zones, are formed across the width of the cell strap 310. In this particular example, the raised features 316 are shown formed between the slits 312 of the strap 310 and the central narrowed portion of body 311 which forms the fuse link 315 in the body 311 of strap 310. The raised features 316 may be formed as shown and described in FIGS. 2A and 2B.

In one example, parallel connected cells 120A/120B in FIG. 1 may be connected by strap 310 in FIG. 3, and serially connected cells 120 in FIG. 1 may be connected by straps 210 as shown in FIGS. 2A and 2B. In another example, each of the cells 120, 120A and 120B may be connected by straps 310 shown in FIG. 3. Thus, all cell straps connecting cell in series or parallel within pack 100 can be embodied as cell strap 310.

In another example, cell strap configurations 110A' and 110A' in FIGS. 5 and 6 (alternative fuse link designs) may include the raised features 216/316 formed across the width of straps 110A', 110A" on each end portion 113, 114 between the slits 112 and corresponding centrally located fuse link (which could also be fuse 115' of FIG. 5 or PTC device 115" of FIG. 6).

Of course, the location of slits 312, fuse link 315 (i.e., narrowed portion of body 311) and raised features 316 in FIG. 3 is merely exemplary. These locations can be varied in a somewhat similar fashion as shown in FIGS. 7A to 7H. The narrowed portion of body 31 forming the fuse link could be formed off-center or at one of the ends of strap 310. Further, as noted above a fuse 115' or PTC device 115" in FIGS. 5 and 6 may be substituted for the fuse link 315 shown in FIG. 3. Slits 312 can be formed in the middle or sides of cell strap 310, or no slits 312 may be formed therein. In another example, the raised features 316 may be formed at ends 313, 314 of strap 310, and/or multiple raised features 316 (>2) can be formed across the width of cell strap 310, with or without slits 312 formed therein. Such variations would be evident to one of ordinary skill in the art.

Accordingly, the cell strap 310 of FIG. 3 can divert stresses away from more fragile welds at the weld joints 318 that are induced due to pack vibration, drop or impact, while also reducing the likelihood of a thermal runaway condition occurring in a damaged cell connected thereto.

FIG. 4 is a top view of a cell connection strap for battery cells of a battery pack in accordance with another example embodiment. Instead of employing a fuse link as shown in FIGS. 1 and 3, singly or in combination with the reduced rigidity provided by the raised features 216/316 in FIG. 3, the cell straps 110 and/or 110A of battery pack 100 in FIG. 1 can be configured in another construction which also enhances deformation of the strap under stress to protect the welds at weld joints 418, while acting as a fusible link between cells 120 to avoid a thermal runaway condition in a damaged cell 120 that is connected thereto.

In FIG. 4, the cell strap 410 includes a body 411 terminating at ends 413, 414 with a slit 412 formed lengthwise in the body 411 in each end 413, 414, dividing a positive electrode leg 417 from a negative electrode leg 419 of the strap 410. However, the body 411 of strap 410 includes a second pair of slits 416, one slit formed on each opposite side along the length of strap 410. Slits 416 are formed between the slits 412 that are formed in the ends 413, 414 of body 411. The second pair a slits 416 are formed in a widthwise direction of the body 411, generally in a central area or portion of the body 411 of strap 410 so as to be perpendicular to slits 412. The slits 416 of the second pair are offset from one another, with a portion of the body 411 between the offset slits 416 forming a fuse link in the strap 410.

The inclusion of slits 416 decreases the overall rigidity of the strap 410. The slits 416 provide crumple zones where the strap 410 can more easily deform to allow for relative movement between the cells 120 without translating the stress to the welds at weld joints 418.

Additionally the inclusion of slits 416 enables the cell strap 410 to be used as a fusible link, as the area of the body 411 between the offset slits 416 is reduced. Thus, in the scenario described in the example of FIG. 1, as an undamaged cell 120A that is connected to strap 410 begins to quickly dump its energy into the damaged cell 120B, the current will climb in the portion of strap body 411 between the slits 416 to blow open that portion of the strap 410, thus preventing the energy from being transferred from the undamaged cell 120A to damaged cell 120B. This may prevent a thermal runaway condition in a damaged cell 120 or 120A/B of pack 100 from occurring. Accordingly, so long as a desired fuse-blow current is significantly higher than the operating current, this type of fusible link in strap 410 of FIG. 4 may provide desired reliability.

The example embodiments of the present invention being thus described, it will be obvious that the same may be varied in many ways. Such variations are not to be regarded as departure from the spirit and scope of the example embodiments of the present invention, and all such modifications as would be obvious to one skilled in the art are intended to be included within the scope of the appended claims herein.

## Claims

1. A cell connection strap for electrically connecting a pair of adjacent battery cells within a battery pack, comprising:
a body, the body having a length extending between a first and second end and a width between sides thereof, and
a fuse link disposed in the body between the first and second ends.

2. The strap of claim 1, wherein the fuse link is embodied as a portion of the body located at a central portion of the body between the first and second ends and which has a width that is narrower than a width of the body at the first and second ends.

3. The strap of claim 1, wherein the fuse link is embodied as a portion of the body at one of the first end and second end which has a width that is narrower than a width of the body at the other of the first and second end.

4. The strap of claim 1, wherein
the body further comprises a first body portion terminating at the first end and a second body portion terminating at the second end, and
the fuse link is a fuse attached to the body between the first and second body portions.

5. The strap of claim 1, wherein
the body further comprises a first body portion terminating at the first end and a second body portion terminating at the second end, and
the fuse link is a positive temperature coefficient (PTC) device attached to the body between the first and second body portions.

6. The strap of claim 1, wherein a slit is formed in each of the first and second ends to form a positive electrode leg and a negative electrode leg in each of the first and second ends of the cells.

7. The strap of claim 6, wherein the fuse link is embodied as a portion of the body located between the slits formed in the first and second ends and which has a width that is narrower than a width of the body at the first and second ends.

8. The strap of claim 1, wherein a slit is formed in opposing sides of the body and the fuse link is formed at one of the first and second ends.

9. The strap of claim 1, wherein no slits are formed in the body and the fuse link is formed at one of the first and second ends.

10. The strap of claim 1, wherein
a first pair of slits are formed in a lengthwise direction of the body, one slit of the pair formed in each of the first and second ends to form a positive electrode leg and a negative electrode leg in each of the first and second ends of the cells, and
a second pair of slits are formed in a widthwise direction of the body between the first and second ends, one slit formed in each side of the body so as to be perpendicular to the slits formed in the first and second ends.

11. The strap of claim 10, wherein a central portion of the body between the second pair of slits forms a fuse link in the strap.

12. The strap of claim 1, further comprising:
a plurality of raised features formed across a widthwise direction of the body.

13. The strap of claim 12, wherein the raised features are formed between the first and second ends.

14. The strap of claim 1, wherein the fuse link is a fuse formed on a side of the body between the first and second ends.

15. The strap of claim 1, wherein the battery cells are lithium-ion (Li-ion) cells, and the fuse link is provided to prevent a thermal overload condition from occurring in a Li-ion cell connected thereto.

16. A battery pack, comprising:
a housing,
a plurality of cells disposed in the housing and configured in a serial-parallel arrangement within the housing,
a plurality of cell connection straps for electrically connecting pairs of adjacent battery cells within a battery pack, wherein a cell strap connecting a pair of cells in parallel in the pack includes a fuse link therein.

17. The battery pack of claim 16, wherein cell straps with fuse links are provided for connecting pairs of adjacent battery cells in series within the pack.

18. The battery pack of claim 16, wherein the battery cells are lithium-ion (Li-ion) cells, and the fuse link is provided to prevent a thermal overload condition from occurring in a Li-ion cell connected to a given strap.

19. A cell connection strap for electrically connecting a pair of adjacent battery cells within a battery pack, comprising:
a body, the body having a length extending between a first and second end and a width between sides thereof, and
a plurality of raised features formed in the body between the first and second ends.

20. The strap of claim 19, further comprising:
a fuse link disposed the body between the first and second ends,
wherein the raised features are formed in a widthwise direction of the body and are disposed on either side of the fuse link between the fuse link and the first and second ends of the body.

21. The strap of claim 19, wherein the straps are attached by welds to the cells at weld joints and the raised features permit relative movement between the cells in the pack due to vibration or an impact of the pack from translating stress to the welds at the weld joints.

22. The strap of claim 19, further comprising:
a fuse link disposed in the body between the first and second ends.

23. The strap of claim 22, wherein the fuse link is embodied as a portion of the body located between the first and second ends and which has a width that is narrower than a width of the body at the first and second ends.

24. The strap of claim 22, wherein the fuse link is embodied as a portion of the body at one of the first end and second end which has a width that is narrower than a width of the body at the other of the first and second end.

25. The strap of claim 19, wherein
the body further comprises a first body portion terminating at the first end and a second body portion terminating at the second end, and
the fuse link is a fuse attached to the body between the first and second body portions.

26. The strap of claim 19, wherein
the body further comprises a first body portion terminating at the first end and a second body portion terminating at the second end, and
the fuse link is a positive temperature coefficient (PTC) device attached to the body so as to form a central part of the body between the first and second body portions.

27. The strap of claim 19, wherein the battery cells are lithium-ion (Li-ion) cells, and the fuse link is provided to prevent a thermal overload condition from occurring in a Li-ion cell connected thereto.

28. The strap of claim 19, wherein one or more slits are formed in the body to form a positive electrode leg and a negative electrode leg in the strap, and the fuse link is embodied as a portion of the body having a width that is narrower than a width of the body at one or both of the first and second ends.

29. A battery pack, comprising:
a housing,
a plurality of cells disposed in the housing and configured in a serial-parallel arrangement within the housing,
a plurality of cell connection straps for electrically connecting pairs of adjacent battery cells within a battery pack, each cell strap having a body terminating between first and second ends, wherein a cell strap connecting a pair of cells in parallel in the pack includes a fuse link and a plurality of raised features formed in the body between the first and second ends.

30. The battery pack of claim 29, wherein a cell strap connecting a pair of cells in series in the pack includes a plurality of raised features formed in the body and a fuse link formed in the body between the first and second ends.

31. The battery pack of claim 29, wherein the battery cells are lithium-ion (Li-ion) cells, and the fuse link is provided to prevent a thermal overload condition from occurring in a Li-ion cell connected to a given strap.

32. The battery pack of claim 29, wherein the straps are attached by welds to the cells at weld joints and the raised features permit relative movement between the cells in the pack due to vibration or an impact of the pack from translating stress to the welds at the weld joints.

33. A cell connection strap for electrically connecting a pair of adjacent battery cells within a battery pack, comprising:
a body having a length extending between a first and second end and a width between sides thereof,
a first pair of slits, each slit of the first pair formed in a lengthwise direction of the body at a corresponding end, and
a second pair of slits are formed in a widthwise direction of the body between the first and second ends, one slit formed in each side of the body.

34. The strap of claim 33, wherein the second pair of slits are formed offset from one another in opposite sides in a central portion of the body, with a portion of the body between the offset second pair of slits forming a fuse link in the strap.

35. The strap of claim 33, wherein the straps are attached by welds to the cells at weld joints and the second pair of slits reduce the rigidity of the strap so as to permit relative movement between the cells in the pack due to vibration or an impact of the pack from translating stress to the welds at the weld joints.

36. A battery pack, comprising:
a housing,
a plurality of cells disposed in the housing and configured in a serial-parallel arrangement within the housing,
a plurality of cell connection straps for electrically connecting pairs of adjacent battery cells within a battery pack, each cell strap further comprising:
a body having a length extending between a first and second end and a width between sides thereof,
a first pair of slits, each slit of the first pair formed in a lengthwise direction of the body at a corresponding end of the body, and
a second pair of slits formed in a widthwise direction of the body between the first and second ends, a slit of the pair formed in each side of the body.
